# EUROPÄISCHE PATENTSCHRIFT

(11) **EP 0 895 588 B1**
(45) Veröffentlichungstag und Bekanntmachung des Hinweises auf die Patenterteilung: **09.07.2003**
(21) Anmeldenummer: 97921674.4
(22) Anmeldetag: 21.04.1997
(51) Int. Cl.: G01N 21/25

(54) **UNTERSUCHUNGSVORRICHTUNG**
INVESTIGATION DEVICE
DISPOSITIF POUR L'INVESTIGATION

(30) Priorität: 22.04.1996 DE 19615957
(43) Veröffentlichungstag der Anmeldung: 10.02.1999
(73) Patentinhaber: Bruins, Hans Joachim, 82178 Puchheim (DE)
(72) Erfinder: Bruins, Hans Joachim, 82178 Puchheim (DE)
(74) Vertreter: Hertz, Oliver, Dr.
(86) Internationale Anmeldenummer: EP9701995
(87) Internationale Veröffentlichungsnummer: WO97040364

(56) Entgegenhaltungen:
- EP-A- 0 109 536
- EP-A- 0 677 732
- DE-A- 2 114 107
- US-A- 3 697 185
- US-A- 5 210 590

## Beschreibung

Die Erfindung betrifft eine Vorrichtung, mit der zur Untersuchung mehrerer Probenraumbereiche und/oder mehrerer Probenräume Probensignale verteilt und Analysensignale erfaßt werden und insbesondere eine Vorrichtung mit den Merkmalen gemäß dem Oberbegriff von Patentanspruch 1.

In der chemischen Prozeßtechnik ist es erforderlich, den Ablauf einer chemischen Reaktion zwischen mehreren Komponenten in einem Reaktionsgefäß zu überwachen. Hierzu bietet sich die Analyse der zu überwachenden Komponenten anhand von deren Wechselwirkung mit elektromagnetischer Strahlung (insbesondere sichtbarer Bereich und angrenzende Wellenlängen, d. h. UV/VIS, NIR, IR) an. Die elektromagnetische Strahlung wird als Probensignal in das Reaktionsgefäß geführt, dort durch die Wechselwirkung in charakteristischer Weise verändert und als Analysensignal (oder Sondensignal) zu einer Meßvorrichtung zurückgeführt.

Es ist bekannt, diese optische Messung entsprechend dem in Figur 6A schematisch dargestellten Prinzip durchzuführen. Das von der Lichtquelle 10 ausgehende Probenlicht wird am Kopplungselement 201 in einen Lichtleiter 202 eingekoppelt und zu der Sonde 204 im Reaktionsgefäß 50 geführt. Die Sonde 204 kann bei dieser (und bei allen nachfolgend beschriebenen Anwendungen) z.B. durch eine Tauchsonde (Transmissionssonde, ATR-Sonde, Reflexionssonde, Transflexionssonde oder dergl.) gebildet werden. Anschließend wird das nach der Wechselwirkung spektral und intensitätsmäßig veränderte Licht (Analysen- oder Sondensignal) über den Lichtleiter (205) zu der Auskoppelstelle 206 geführt und von dort auf ein Detektorelement (nicht gezeigt) des Detektormittels 40 gestrahlt. Neben dem Meßkanal 20 verfügt die Anordnung über einen Referenzkanal 30, bei dem Licht von der Lichtquelle 10 ohne Vermittlung eines Lichtleiters auf das gleiche oder ein weiteres Detektorelement (nicht gezeigt) des Detektormittel 40 gestrahlt wird, um Schwankungen der Lampenparameter zu erfassen und bei der Auswertung des Analysensignals zu berücksichtigen.

Das in Fig. 6A gezeigte System besitzt die folgenden Nachteile. Gewöhnlich besitzt das Reaktionsgefäß 50 ein so großes Volumen, das sich bei dem Reaktionsablauf räumlich Inhomogenitäten bilden können, so daß das mit der Sonde 204 ermittelte Untersuchungsergebnis nicht notwendigerweise für das gesamte Reaktionsgefäß repräsentativ ist. Ferner können Verunreinigungen oder Fehler an der Sonde 204 zu unbemerkten Fehlergebnissen führen.

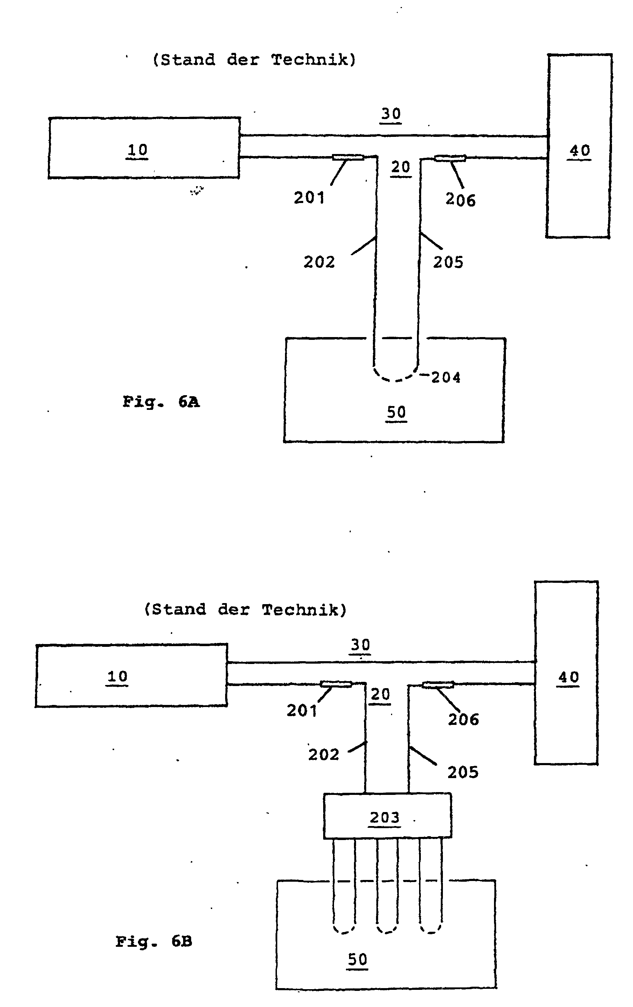

Dieser Nachteil läßt sich beheben, indem das System gemäß Figur 6B modifiziert wird. So ist es bekannt, das vom Lichtleiter 202 geführte Probensignal mit einer Verteilervorrichtung 203 auf eine Vielzahl von Sonden 204a-c zu verteilen. Das von den Sonden 204a-c ermittelte Analysensignal wird wiederum durch den Verteiler 203 in den Lichtleiter 205 geleitet, der zu dem Auskoppelelement 206 führt. Neben dem Probenkanal 20 ist wie im Fall von Fig. 6A ein Referenzkanal 30 vorgesehen.

Die bekannte Verteilervorrichtung 203 arbeitet nach einem Multiplexer-Prinzip. Das heißt, daß die verschiedenen Kanäle (a-c) zeitlich versetzt angesteuert werden, indem der Probensignal-Lichtleiter 202 schrittweise mit jedem der Kanäle verbunden wird. Diese zeitlich versetzte Kopplung erfolgt herkömmlicherweise mit mechanischen Mitteln.

Das System gemäß Fig. 6B besitzt die folgenden Nachteile. Aufgrund der zeitlich versetzten Messung ist es nicht möglich, für alle Untersuchungskanäle zeitgleiche Ergebnisse zu erhalten. Dadurch können die Meßwerte nicht ohne weiteres verglichen werden. Die Untersuchung erfordert durch das mechanische Umschalten auf die verschiedenen Untersuchungskanäle a-c verhältnismäßig viel Zeit. Die Verfolgung von Prozeßabläufen schneller Reaktionen ist erschwert oder unmöglich. Außerdem bestehen hohe Anforderungen an die Justierung der in dem Verteiler 203 vorgesehenen beweglichen optischen Teile. Ferner kommt es beim Betrieb des Systems gemäß Fig. 6B zu Verschleißerscheinungen, die die Einsatzbereitschaft einschränken und Kosten steigern. Schließlich wird die Reproduzierbarkeit der Meßergebnisse durch die Bewegung der Lichtleiter beeinträchtigt.

Die bekannten Systeme gemäß den Figuren 6A und 6B sind nicht auf Anwendungen in der chemischen Prozeßtechnik beschränkt. Die Verwendungen für andere physikalisch-technische Meßaufgaben sind jedoch mit denselben Problemen und Nachteilen verbunden, wie sie oben ausgeführt wurden.

Weitere Mehrkanal-Analysatoren oder -photometer sind aus US-A-5210590, DE-A-2114107, EP-A-0677732, EP-A-0109536 und US-A-3697185 bekannt.

Es ist die Aufgabe der Erfindung, eine verbesserte Vorrichtung zur Untersuchung einer Vielzahl von Probenbereichen und/oder Proben bereitzustellen, mit der die obengenannten Nachteile ausgeräumt werden und die eine hohe Genauigkeit und Zuverlässigkeit ermöglicht.

Diese Aufgabe wird durch den Gegenstand des Patentanspruchs 1 gelöst. Vorteilhafte Ausführungsformen der Erfindung ergeben sich aus den abhängigen Ansprüchen.

Eine wichtige Idee der Erfindung besteht darin, ein Untersuchungssystem zu schaffen, das in Bezug auf die Meßwertaufnahme ein echtes Mehrkanalsystem darstellt. Hierzu ist insbesondere ein Verteilermittel (oder: Lichtkoppler) vorgesehen, mit dem das Probensignal (oder: Probenlicht) von einem Beleuchtungsmittel (Meßlichtquelle) zeitgleich in eine Vielzahl von Leitermitteln (insbesondere Lichtleiter) einkoppelbar ist. Damit wird erstmalig von der zeitversetzten Multiplex-Verarbeitung zur echten Parallel-Verarbeitung übergegangen. Das erfindungsgemäße Untersuchsungssystem ist vorzugsweise derart ausgebildet, daß auch in Bezug auf die Meßwerterfassung ein echtes Mehrkanalsystem bereitgestellt wird. Hierzu wird ein Detektormittel in eine Vielzahl von Detektorelementen unterteilt, denen jeweils eines der Vielzahl von Leitermitteln (Lichtleiter) mit dem Sondensignal zugeordnet ist.

Ausführungsformen des erfindungsgemäßen Untersuchungssystems sehen ferner die Einrichtung eines Referenzkanales vor, mit einer Vielzahl von Detektorelementen entsprechend der Vielzahl von Proben- bzw. Sonden-Lichtleitern versehen ist. Es wird somit das Mehrkanalprinzip auch auf den Referenzkanal angewendet.

Gemäß einer bevorzugten Ausführungsform wird das erfindungsgemäße Untersuchungssystem durch ein Spektralphotometer gebildet, bei dem zur Untersuchung einer Vielzahl von Probenräumen der Meßkanal in eine Vielzahl von Einzelkanälen unterteilt ist, wobei Probenlicht mit einem Lichtkoppler gleichzeitig in eine Vielzahl von Lichtleitern, die zu Sonden in den Proberäumen führen, einkoppelbar ist und wobei das nach Wechselwirkung des Probenlichtes mit den Proben veränderte Analysenlicht als Sondenlicht mit einer Vielzahl von Lichtleitern zu einer entsprechenden Vielzahl von Detektorelementen führbar ist. Dieses Spektralphotometer ist ferner mit einem Referenzkanal versehen, der alternativ zu dem Meßkanal betreibbar ist und eine Vielzahl von Referenzlichtleitern umfaßt, in die mit einem Lichtkoppler zeitgleich Referenzlicht einkoppelbar wird und die jeweils entsprechend als Referenzmittel für die Vielzahl von Detektorelementen verwendet werden.

Die Ausführungsformen des erfindungsgemäßen Untersuchungssystems (insbesondere des Spektralphotometers) sehen verschiedene Lichtkopplertypen wie z.B. einen Faserkoppler, einen Plattenkoppler, einen Bündelkoppler oder einen Spiegelkoppler vor.

Im folgenden werden unter Bezugnahme auf die beigefügten Zeichnungen Ausführungsformen des erfindungsgemäßen Untersuchungssystems beschrieben. Es zeigen:
- Figur 1:: ein Untersuchungssystem mit einem mehrkanaligen Meßkanal und einem einkanaligen Referenzkanal;
- Figur 2:: eine Ausführungsform des erfindungsgemäßen Untersuchungssystems mit mehrkanaligen Meß- und Referenz-Kanälen;
- Figur 3A-D:: verschiedene Ausführungsformen von bei dem erfindungsgemäßen Untersuchungssystem eingesetzten Verteilermitteln;
- Figur 4:: eine schematische Ansicht eines Spektralphotometers, das entsprechend dem erfindungsgemäßen Untersuchungssystem aufgebaut ist;
- Figur 5:: das Prinzip der Signalerfassung von Meß- und Referenzlicht bei einem Spektralphotometer gemäß Fig. 4; und
- Figuren 6A und 6B:: Prinzipskizzen herkömmlicher Untersuchungssysteme (Stand der Technik).

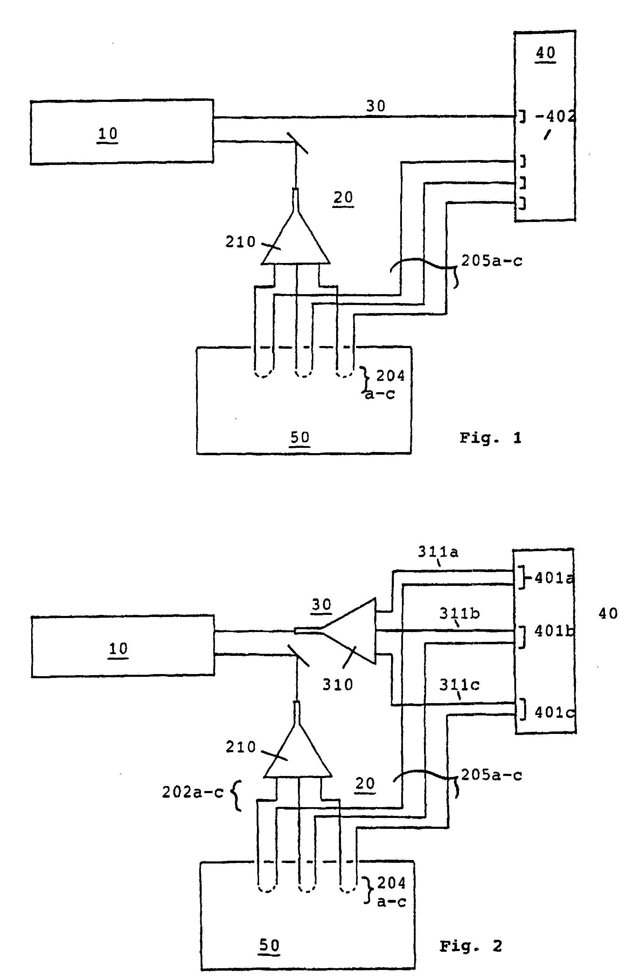

Die in den Figuren 1 und 2 als Prinzipskizzen dargestellten Untersuchungsvorrichtungen umfassen jeweils ein Beleuchtungsmittel 10 (oder: Lichtquelle 10), einen Meßkanal 20, einen Referenzkanal 30 und ein Detektormittel 40. Die durchgezogenen Linien der Meß- und Referenzkanäle stellen einerseits Lichtwege mit freier Strahlungsausbreitung von der Lichtquelle 10 jeweils zum Lichtkoppler 210 oder zum Lichtkoppler 310 bzw. dem Detektorelement 402 und im übrigen in Leitermitteln (Lichtleiter) geführte Lichtwege dar. Die Figuren zeigen beispielhaft den Aufbau des Untersuchungssystems mit 3 Einzelkanälen, d.h. mit einem dreikanaligen Meßkanal und ggf. einem dreikanaligen Referenzkanal.

Der bei beiden Ausführungsformen in gleicher Weise aufgebaute Meßkanal 20 enthält ein Verteilermittel (oder: Lichtkoppler) 210, mit dem das von der Lichtquelle 10 ausgehende Meßlicht (Probensignal) zeitgleich in drei Lichtleiter (Probensignallichtleiter) 202a-c eingekoppelt wird, die jeweils zu Sonden 204a-c führen, welche in dem Proben- oder Reaktionsraum 50 angeordnet sind. Von den Sonden 204a-c führt eine zweite Gruppe von Lichtleitern 205a-c (Sondensignallichtleiter) zu dem Detektormittel 40, wo das nach Wechselwirkung in dem Probenraum 50 modifizierte Meßlicht (Sondensignal) jeweils aus den Lichtleitern ausgekoppelt und von Detektorelementen 401a-c erfaßt wird.

Der Referenzkanal 30 wird entweder durch einen direkten Lichtweg durch die Luft von der Lichtquelle 10 zu einem Referenzdetektorelement 402 (s. Fig. 1) oder erfindungs gemäß durch eine Mehrkanalanordnung (s. Fig. 2) gebildet. Bei der Mehrkanalanordnung wird das von der Lichtquelle 10 ausgehende Referenzlicht durch einen Lichtkoppler 310 auf die Referenz-Lichtleiter 311a-c verteilt und jeweils zu einem der Detektorelemente 401a-c geführt, die die Sondensignale des Meßkanals 20 erfassen. Das Referenzsignal wird bei der ersten Ausführungsform (Fig. 1) berücksichtigt, indem die mit den Sondensignal-Detektoren 401a-c erfaßten Meßwerte mit elektronischen Mitteln auf der Grundlage des mit dem Referenzdetektor 402 erfaßt Referenzwertes abgeglichen werden. Gemäß der zweiten Ausführungsform (Fig. 2) erfolgt diese Signalkorrektur an jedem Sondensignal-Detektor 401a-c, indem dieser wechselweise mit dem Referenz- oder Meßlicht bestrahlt wird. Hierfür ist entweder in der Lichtquelle 10 ein Mittel zur wechselweisen Beleuchtung entweder des Meß- oder des Referenz-Kanales oder im Detektormittel 40 an jedem Detektormittel 401 ein Mittel zum wechselweisen Abschirmen des Lichtes vom Meß- oder vom Referenz-Kanal vorgesehen.

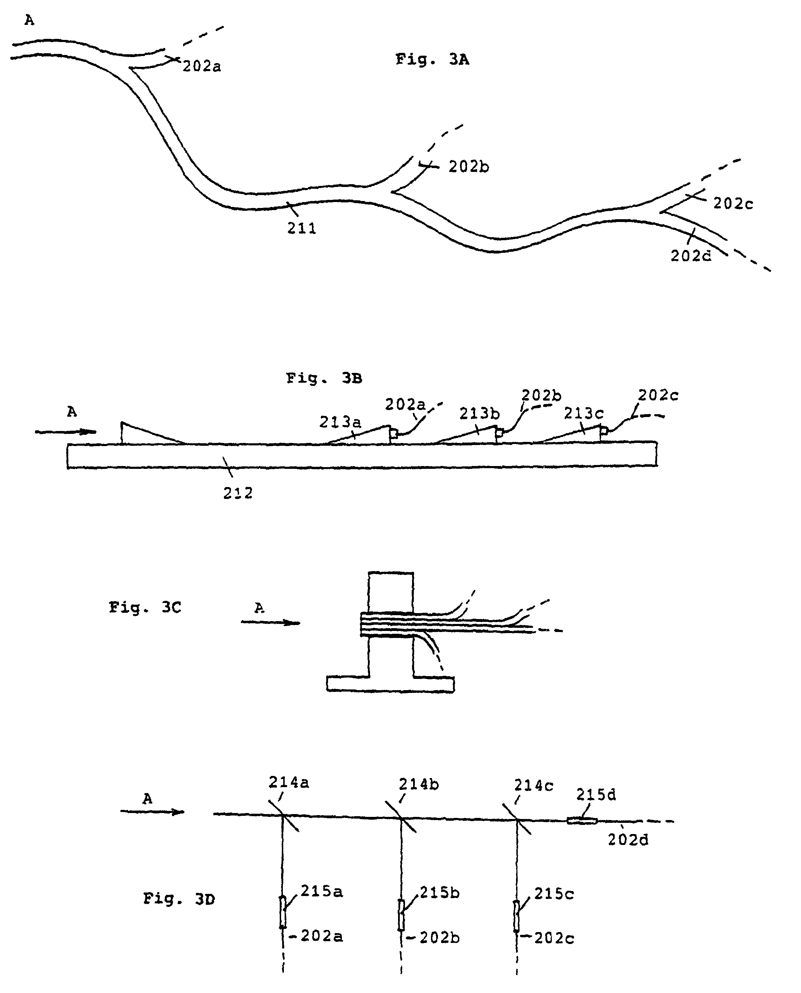

Als Verteilermittel (oder Lichtkoppler) 210, 310 sind die in den Figuren 3A-c schematisch dargestellten Bauformen denkbar. Die erste Bauform (Fig. 3A) stellt einen Faserkoppler dar, wie er prinzipiell aus der Signalleitung in der Informationsverarbeitung bekannt ist. An einer Lichtleiterfaser 211 ist mittels eines geeigneten Schmelz-Zieh-Verfahrens eine Vielzahl von Lichtleitern 202a-d angebracht, auf die das in die Faser 211 in Richtung des Pfeiles A eingekoppelte Licht geführt wird. Die Lichtleiter 202a-d (in diesem Fall: Verteilung auf vier Lichtleiter) führen dann das Meßlicht in den Probenraum 50 (s. Figuren 1, 2).

Ein weiteres Beispiel wird durch den Plattenkoppler (s. Fig. 3B) gebildet, bei dem das Meß- oder Referenzlicht in Richtung des Pfeiles A über einen Keil in eine Lichtleiterplatte 212 eingekoppelt wird. In dieser Platte 212 wird das Licht durch Totalreflexion bis zu den Auskoppelkeilen 213a-c geführt, die jeweils mit den Lichtleitern 202a-c verbunden sind.

Ein weiteres Beispiel, mit dem das erfindungsgemäße Verteilermittel bevorzugt realisiert werden kann, wird durch einen Bündelkoppler (s. Fig. 3C) gebildet. In diesem Fall stellt das erfindungsgemäße Verteilermittel eine Fassung dar, in der die Enden von einer Vielzahl von Lichtleitern derart zusammengelegt und angeordnet sind, daß eine gemeinsame Bündelstirnfläche gebildet wird, auf die das Meß- oder Referenzlicht projizierbar ist. Diese Bündelstirnfläche ist vorzugsweise im wesentlichen eben und poliert ausgebildet.

Gemäß einer ersten Ausführungsform ist jeder Lichtleiter eine gesonderte Mono-Mode-Faser, die jeweils einem Meß- oder Referenzkanal zugeordnet ist.

Gemäß einer alternativen Ausführungsform ist jedem Meß- und/oder Referenzkanal eine Vielzahl feiner Lichtleiterfasern zugeordnet, die zur Bildung der genannten Bündelstirnfläche aufgesplittet (zerlegt) und homogen verteilt mit den Faserenden der übrigen Kanäle zusammengesetzt werden. Durch die statistische Verteilung der Faserenden, die jeweils einem Kanal zugeordnet sind, werden an der Bündelstirnfläche Beleuchtungsschwankungen (z.B. Wendelbewegungen der Lichtquelle) ausgeglichen. Die Verteilung der Faserenden erfolgt gleichmäßig auf einer Fläche, die etwa dem Beleuchtungsfleck der Lichtquelle entspricht.

Im Fall der Zuordnung einer Vielzahl von Fasern (Durchmesser rd. 50 µm) zu jedem Kanal kann für jeden Kanal ein Übergangsstück (nicht dargestellt) vorgesehen sein, an dem die feinen Fasern vom Kopplerende an eine Mono-Mode-Faser angekoppelt werden, mit der der Abstand zum Meßort (Sonde) überbrückt werden kann.

Das Gesamtbündel der Faserenden wird bevorzugt in Bezug auf den Strahlengang des von der Lichtquelle 10 ausgehenden Lichtes so ausgerichtet, daß die Bündelachse mit der optischen Achse des Strahlenganges zusammenfällt. Die Anzahl der in einem Bündel zusammengefaßten Lichtleiter ist an die technischen Anforderungen des jeweiligen Untersuchsungssystems anzupassen und kann beispielsweise zwei bis acht aber auch mehr Lichtleiter umfassen. Der Bündelkoppler ist sowohl in dem Meß- als auch im Referenkanal einsetzbar.

Schließlich ist ein weiteres Beispiel eines Verteilermittels in Fig. 3D dargestellt. Bei dem Spiegelkoppler hält das von der Lichtquelle 10 in Richtung des Pfeiles A geführte Licht auf eine Vielzahl von teildurchlässigen Spiegeln 214a-c, in denen jweils ein Teil des Meßlichtes abgetrennt und an den Positionen 215a-d in die Lichtleiter 202a-d (in diesem Fall vier Lichtleiter) eingekoppelt.

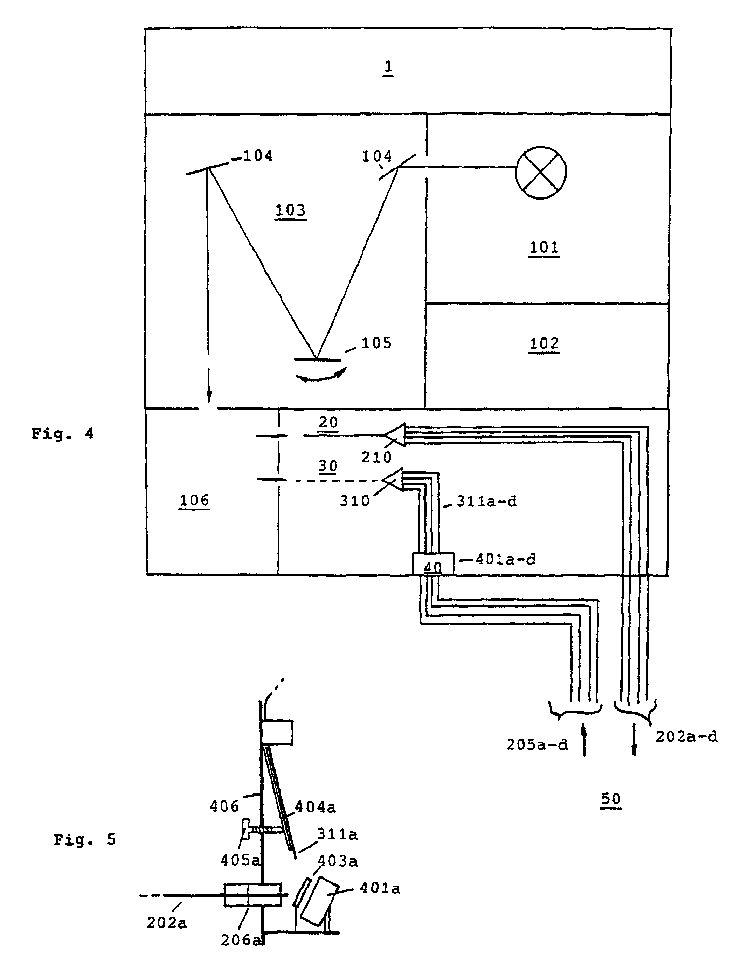

Figur 4 zeigt schematisch eine Realisierung der erfindungsgemäßen Untersuchungsvorrichtung als 4-Kanal-Spektralphotometer. Die dargestellten Komponenten sind vorteilhafterweise in einem gemeinsamen Gehäuse untergebracht, das das Grundgerät des Spektralphotometers darstellt. Das Beleuchtungsmittel (oder die Lichtquelle) 10 (s. Figuren 1, 2) wird durch die mit einem stabilisierten Netzteil 102 betriebene Lampe (z.B. Halogenlampe) 101, den Monochromator 103 und das Kanalwählmittel 106 gebildet. Der Monochromator 103 kann z.B. durch einen Gittermonochromator gebildet werden, bei dem das von der Lampe 101 ausgehende Licht über einen Spiegel 104 auf das schwenkbare Gitter 105 gerichtet und eine von diesem erzeugte Beugungsordnung mit dem zweiten Spiegel 104 in das Kanalwählmittel 106 gelenkt wird. Dieses enthält einen schwenkbaren Spiegel, mit dem das spektrale Meßlicht über planare Spiegel in den Meßkanal 20 (durchgezogen gezeichnet) oder in den Referenzkanal 30 (gestrichelt gezeichnet) geführt wird. Das Meßlicht wird kollimiert auf die Verteilermittel (oder Lichtkoppler) 210 oder 310 gelenkt, die entsprechend einer der oben beschriebenen Verteilermittel ausgebildet sein können. Vom Lichtkoppler 210 führen Lichtleiter 202a-d zu den (nicht gezeigten) Sonden im Probenraum 50, von denen wiederum Lichtleiter 205a-d zu den im Grundgerät befindlichen Detektorelementen 401a-d führen. Vom Lichtkoppler 310 aus führen die Lichtleiter 311a-d im Grundgerät zu den jeweiligen Detektorelementen 401a-d. Die Meß- und Referenzlichterfassung an jedem der Detekorelemente wird weiter unten unter Bezug auf Figur 5 erläutert.

Das erfindungsgemäß aufgebaute Spektralphotometer ist außerdem mit einer Steuerung 1 versehen, über die insbesondere die Meß- und Referenzkanal-Umschaltung (Kanalwählmittel 106), der Monochromatorantrieb und die Meßwertaufnahme steuerbar ist. Die optischen Bauteile des Spektralphotometers, insbesondere die Komponenten zur Einkopplung des Meßlichtes in die Lichtleiter, werden bevorzugterweise erschütterungsgedämpft auf einem gemeinsamen, massiven Tragemittel angeordnet.

Die in Figur 4 schematisch gezeigten Detektorelemente 401a-d können z.B. an einer Seitenwand des Photometergrundgerätes angebracht sein. Dies ist am Beispiel eines einzelnen Detektorelementes 401a als schematische Seitenansicht in Fig. 5 vergrößert dargestellt.

Gemäß Figur 5 ist das Detektorelement 401a auf der Gehäuseinnenseite einer Seitenwand 406 (z.B. der vorderen Seitenwand) und gegenüber Restlicht geschützt angebracht. Die von der Sonde im Probenraum herangeführte Lichtleiterfaser 202a wird durch einen Kopplungseinsatz 206 (z.B. SMA-Standardstecker) in der Gehäusewand 406 derart aufgenommen, daß das Faserende zu der Detektorfläche weist. Die lichtempfindliche Fläche des Detektors, der zum Beispiel durch eine Photodiode gebildet wird, ist an die Apertur des Faserendes (z.B. Apertur 0,22) angepaßt. An der Gehäuseinnenseite wird außerdem der Referenz-Lichtleiter 311a an das Detektorelement 401a herangeführt. Mit einer verstellbaren Auflage kann der Referenz-Lichtleiter 311a in Bezug auf die Detektorfläche eingestellt (abgestimmt) werden. Die Auflage besteht aus einem an der Gehäusewand 406 angebrachten federnden Element 404a, dessen Neigung gegenüber der Gehäusewand 406 mittels einer Stellschraube 405a veränderlich ist. Die Stellschraube 405a ist an einem Ende derart mit einer halbkugelförmigen Fläche versehen, daß das federnde Element 404 in jeder Position der Stellschraube 405a einen eindeutigen Auflagepunkt besitzt und der Stellwinkel des federnden Elementes 404a in definierter Weise von der Stellung der Stellschraube 405a abhängt.

Die Funktion der mechanisch verstellbaren Zuführung des Referenz-Lichtleiters 311a besteht darin, die über den Referenzkanal 30 auf das Detektorelement 401a fallende Lichtmenge an die im Meßkanal 20 gemessene Lichtmenge anzupassen. Damit ist es möglich, das Detektorelement 401a sowohl für die Meßwert- als auch für die Referenzwert-Erfassung mit der gleichen Verstärkung zu betreiben, so daß die Meßwertkorrektur aufgrund des Referenzwertes optimiert wird. Der Lichtmengenabgleich wird dadurch ausgeführt, daß die Position des Referenz-Lichtleiters 311a in Bezug auf die Detektorfläche so verstellt wird, daß nur ein Teil des zur Verfügung stehenden Referenzlichtes erfaßt wird. Durch diese Verstimmung (oder Schwächung) wird im Referenzkanal 30 eine Lichtmengenverringerung erzielt, die der Meßlichtschwächung im Meßkanal 20 entspricht.

Vor dem Detektor 401a kann ferner eine Einrichtung 403a zum wahlweisen Einführen von Filterelementen vorgesehen sein, deren Funktion als Ordnungsfilter weiter unten erläutert wird.

Das nach dem Funktionsprinzip gemäß Fig. 2 aufgebaute Spektralphotometer gemäß den Figuren 4 und 5 wird wie folgt betrieben.

Grundsätzlich ist das erfindungsgemäße Spektralphotometer nach dem bekannten Prinzip der Zweistrahlmessung derart betreibbar, daß vor der eigentlichen Probenmessung sowohl mit dem Referenz- als auch mit dem Meßkanal eine Kalibrierungsmessung gegen einen bekannten Standard durchgeführt wird, mit der eine Kontroll- oder Korrekturlinie ermittelbar ist. Diese Korrekturlinie kann bei der Auswertung der folgenden Probenmessung zur Ermittlung kalibrierter Meßwerte verwendet werden.

Für die Probenmessung wird der Probenraum 50 an geeigneten Positionen mit Sonden bestückt, die mit den entsprechenden Lichtleitern 202 und 205 versehen sind. Nach Erreichen eines stabilen Lampenbetriebs wird eine Vormessung zur Einstellung der Detektorverstärkung und zum Abgleich der Referenz-Lichtleiterposition durchgeführt. Anschließend wird in sämtlichen Kanälen ein Referenz-Lichtspektrum aufgenommen. Hierzu wird das Kanalwählmittel 106 auf den Referenzkanal 30 eingestellt und zur Referenzwerterfassung das Gitter 105 des Monochromators 103 stufenweise über einen Winkelbereich verstellt, der dem jeweils betrachteten Wellenlängenbereich entspricht. Danach wird das Kanalwählmittel 106 auf den Meßkanal 20 gestellt, so daß die eigentliche Meßwerterfassung erfolgen kann. Erfindungsgemäß kann die Meßwerterfassung (Durchfahren bestimmter Wellenlängenbereiche) zeitgleich in allen Einzelkanälen des Meßkanals 20 erfolgen. Die Meßwerterfassung kann zur Verfolgung des zeitlichen Reaktionsverlaufes oder für eine statistische Bearbeitung in schneller Folge wiederholt werden. Je nach der unter den konkreten Versuchsbedingungen erzielten Lampenstabilität wird zwischen den einzelnen Meßwertaufnahmen die Referenzwerterfassung wiederholt.

Gemäß einer Ausführungsform der erfindungsgemäßen Untersuchungsvorrichtung als Spektralphotometer wird dessen Funktion unter Verwendung von Ordnungsfiltern in den Einrichtungen 403a-d modifiziert. Die Beleuchtungsvorrichtung 10 ist derart betreibbar, daß nicht nur eine Beugungsordnung des Monochromatorgitters, sondern mehr Beugungsordnungen in die Meß- und Referenzkanäle 20, 30 eingekoppelt werden. Dementsprechend werden die Untersuchungssonden 204 beim Abscannen des Monochromators mit Probenlicht versorgt, das jeweils simultan durch z. B. zwei Wellenlängen gebildet wird. Um die Sondensignale wellenlängenmäßig getrennt an den Detektorelementen 401 zu erfassen, werden vor ausgewählten der Detektorelemente 401 mit den Einrichtungen 403 Ordnungsfilter angebracht, die jeweils eine der simultan zugeführten Wellenlängen unterdrücken. Somit wird bei dieser Ausführungsform der Erfindung nicht in jedem Sondenkanal der gleiche Wellenlängenbereich erfaßt. In den verschiedenen Kanälen werden vielmehr gleichzeitig zum Beispiel zwei Wellenlängenbereiche abgescant.

Bei geeignetem Einsatz eines Monochromatorgitters mit zum Beispiel 600 Linien/Millimeter kann somit bei einer Messung ein Wellenlängenbereich von z. B. 500 nm bis 1300 nm überstrichen werden. Dies bedeutet einen erheblichen Zeitgewinn bei der Meßwerterfassung.

Die Untersuchungsvorrichtung kann ferner bei Verwendung als Spektralphotometer erfindungsgemäß durch Einsatz einer polychromatischen Probenbeleuchtung wie folgt modifiziert werden.

Bei bestimmten Anwendungen, die sich durch einen hohen Fremdlichtanteil in der zu untersuchenden Probe (z.B. durch Tageslicht) auszeichnen, ist das Spektralphotometer derart ausgelegt, daß die Probe mit polychromatischem (weißem) Licht bestrahlt und das über die Sonden und die Detektorelemente erfaßte Sondensignal spektral selektiv erfaßt wird. Da in diesem Fall das Sondensignal in jedem Probenkanal des Meßkanals 20 separat spektral zerlegt werden soll, muß entweder jeder Probenkanal mit einem Monochromatormittel versehen oder es muß ein von allen Probenkanälen gemeinsam verwendetes Monochromatormittel vorgesehen sein, das dann jedoch zeitlich selektiv probenkanalspezifisch verwendet wird. Dieser zeitselektive Einsatz des gemeinsamen Monochromators kann durch Verwendung eines Verschluß- oder Shutter-Mittels erzielt werden. Das Verschlußmittel kann entweder am Ende der Sondenleiter vorgesehen sein, um jeweils die Erfassung eines Probenkanals bei Verschluß der übrigen Probenkanäle zu erlauben oder das Verschlußmittel kann vor Eintritt des Probenlichtes in die Probenlichtleiter vorgesehen sein, indem die Lichteinkopplung aufeinanderfolgend jeweils in nur eines der Probenlichtleiter erfolgt. Hierfür (und auch bei allen anderen beschriebenen Anwendungen) ist es insbesondere denkbar, daß die Faserenden bei den in Fig. 3C gezeigten Bündelkoppler nicht unmittelbar aneinandergrenzend zur Bildung einer geschlossenen Einkoppelfläche angeordnet, sondern voneinander beabstandet sind. Bei Aufbau des Spektralphotometers mit polychromatischer Probenbeleuchtung kann dann jede einzelne Faser mit einem geeigneten Verschlußmittel (z.B. auf Basis eines magnetischen Betätigungsmittels) versehen sein.

Der Betrieb des erfindungsgemäßen Spektralphotometers mit polychromatischer Probenbeleuchtung erfolgt derart, daß zunächst bei geschlossenen Referenz- und Meßkanälen 20, 30 eine reine Fremdlichtmessung erfolgt, deren Ergebnis dann bei der eigentlichen Probenmessung als Dunkelstrom von den Spektren abziehbar ist.

Die erfindungsgemäße Untersuchungsvorrichtung besitzt die folgenden Vorteile.

Die Meßwerterfassung kann in sämtlichen Einzelkanälen zeitgleich erfolgen. Damit kann bei kumulativer Meßwerterfassung die Meßgenauigkeit erhöht und/oder das zeitliche Ablaufen von Reaktionsvorgängen in dem Probenraum problemlos verfolgt werden. Die Meßzeit wird erheblich verkürzt. Somit kann beispielsweise bei vier Einzelkanälen mit einem Scan-Vorgang die Referenzwerterfassung und mit einem Scan-Vorgang die Meßwerterfassung erfolgen, wohingegen bei den herkömmlichen Systemen (z.B. gemäß Fig. 6B) zur Erzielung eines entsprechenden Ergebnisses insgesamt acht Scan-Vorgänge des Monochromators durchgeführt werden müßten.

Die Verwendung der erfindungsgemäßen Lichtkoppler beseitigt frühere Justier-und Verschleißprobleme bei herkömmlichen Untersuchungssystemen.

Das erfindungsgemäße Untersuchungssystem ist hinsichtlich der Zahl der Einzelkanäle im Rahmen üblicher technischer Anwendungen unbeschränkt einsetzbar. Die Zahl der Einzelkanäle kann in einfacher Weise an die jeweils geforderte Anwendung angepaßt werden. Es ist nicht erforderlich, daß die Sonden der Einzelkanäle innerhalb eines Probenraumes an verschiedenen Positionen angebracht wind. Es ist ersatzweise durch die einfach handhabbare Detektorsteuerung möglich, auch verschiedene Probenräume zeitgleich zu untersuchen. Ferner ist es ersatzweise auch möglich, an den Einzelkanälen des Meßkanals 20 verschiedenartige Sonden anzubringen, auf die das jeweilige Detektorelement einfach abstimmbar ist.

Bei Einsatz in der chemischen Prozeßtechnik wird die Sicherheit der Prozeßüberwachung mit den erfindungsgemäßen Untersuchungssystem erheblich erhöht, da sämtliche Fehler von herkömmlichen Systemen, die durch die zeitversetzte Messung entstehen, beseitigt werden.

## Patentansprüche

1. Untersuchungsvorrichtung, die umfasst:
- ein Beleuchtungsmittel (10) zur Erzeugung eines Probensignals,
- eine Vielzahl von Probensignalleitermitteln (202) zur Führung des Probensignals zu Untersuchungssondenmitteln (204),
- erste Verteilermittel (210) zum gleichzeitigen Einkoppeln des Probensignals in die Probensignalleitermittel (202), und
- ein Detektormittel (40) mit einer Vielzahl von Detektorelementen (401), die jeweils zur Erfassung von Sondensignalen von den Untersuchungssondenmitteln (204) vorgesehen sind,
**gekennzeichnet durch**
- eine Vielzahl von Sondensignalleitermitteln (205) zur Führung von Sondensignalen jeweils von einem Untersuchungssondenmittel (204) zu einem der Detektorelemente (401), und
- eine Vielzahl von Referenzsignalleitermitteln (311) zur Führung eines Referenzsignals von dem Beleuchtungsmittel (10) zu jedem Detektorelement (401), und
- ein zweites Verteilermittel (310) zur gleichzeitigen Einkopplung des Referenzsignals in jedes der Referenzsignalleitermittel (311).

2. Vorrichtung gemäß Anspruch 1, bei der die Referenzsignalleitermittel (311) so angeordnet sind, dass von jedem der Detektorelemente (401) ein abstimmbares Referenzsignal erfassbar ist.

3. Vorrichtung gemäß Anspruch 1 oder 2, bei der die Probensignal-, Sondensignal- und Referenzsignalleitermittel (202, 205, 311) jeweils durch Lichterleiterfasern gebildet werden.

4. Vorrichtung gemäß Anspruch 3, bei der die ersten und/oder zweiten Verteilermittel (210, 310) durch Lichtleiterkoppler (211), Plattenkoppler (212), Bündelkoppler (213) oder Spiegelkoppler (214) gebildet werden.

5. Mehrkanalspektralphotometer, das eine Vorrichtung gemäß einem der Ansprüche 1 bis 4 enthält.

6. Mehrkanalspektralphotometer gemäß Anspruch 5, bei dem das Beleuchtungsmittel eine spektral veränderliche Lichtquelle (10) ist, deren Licht als Probensignal in eine Vielzahl von Lichtleitern gleichzeitig einkoppelbar ist, die getrennte Messkanäle bilden, wobei das erste Verteilermittel (210) einen Bündelkoppler (213) umfasst, an dem die Lichtleiter an ihren einkoppelseitigen Enden mittels einer Fassung bündelartig so angeordnet sind, dass eine Bündelstirnfläche geformt wird, auf die das Probensignal projezierbar ist.

7. Mehrkanalspektralphotometer gemäß Anspruch 6, bei dem jeder Lichtleiter im Bereich des Verteilermittels durch eine Vielzahl von Lichtleiterfasern gebildet wird, wobei die Faserenden über die Bündelstirnfläche gleichmäßig verteilt angeordnet sind.

8. Mehrkanalspektralphotometer gemäß Anspruch 6, bei dem das Beleuchtungsmittel einen Gittermonochromator (103) mit einem Beugungsgitter (105) enthält und das Probensignal mehrere Beugungsordnungen des Beugungsgitters (105) umfasst, wobei an jedem Detektorelement (402) des Detektormittels (40) eine Einrichtung (403) zur wahlweisen Einführung eines Ordnungsfilters zur selektiven Erfassung der Proben- oder Referenzsignale entsprechend einer vorbestimmten Beugungsordnung von den Beugungsordnungen des Probensignals vorgesehen ist.

9. Mehrkanalspektralphotometer gemäß Anspruch 5, bei dem das Beleuchtungsmittel eine polychromatische Lichtquelle (10) ist und bei dem die Verteilermittel (210, 310) und das Detektormittel (40) zur spektral selektiven Signalerfassung ausgelegt sind.

## Claims

1. Investigation device, which comprises:
- an illumination means (10) for producing a sample signal,
- a multiplicity of sample signal guide means (202) for guiding the sample signal to investigation probe means (204),
- first distribution means (210) for the simultaneous coupling of the sample signal in the sample signal guide means (202), and
- a detector means (40) with a multiplicity of detector elements (401) which are provided respectively for the detection of probe signals from the investigation probe means (204),
**characterised by**
- a multiplicity of probe signal guide means (205) for guiding probe signals respectively from an investigation probe means (204) to one of the detector elements (401), and
- a multiplicity of reference signal guide means (311) for guiding a reference signal from the illumination means (10) to each detector element (401), and
- a second distribution means (310) for simultaneous coupling of the reference signal in each of the reference signal guide means (311).

2. Device according to claim 1, in which the reference signal guide means (311) are disposed such that a tunable reference signal can be detected by each of the detector elements (401).

3. Device according to claim 1 or 2, in which the sample signal-, probe signal- and reference signal guide means (202, 205, 311) are formed respectively by light-conducting fibres.

4. Device according to claim 3, in which the first and/or second distribution means (210, 310) are formed by light-conducting c ouplers (211), board couplers (212), beam couplers (213) or reflector couplers (214).

5. Multichannel spectrophotometer, which contains a device according to one of the claims 1 to 4.

6. Multichannel spectrophotometer according to claim 5, in which the illumination means is a spectrally alterable light source (10), the light of which can be coupled simultaneously as sample signal in a multiplicity of light guides which form separate measurement channels, the first distribution means (210) comprising a beam coupler (213), at which the light guides are disposed on its coupling-side ends by means of a mounting in a beam-like manner such that a beam front face is formed, upon which the sample signal can be projected.

7. Multichannel spectrophotometer according to claim 6, in which each light guide in the region of the distribution means is formed by a multiplicity of light-conducting fibres, the fibre ends being disposed uniformly distributed over the beam front face.

8. Multichannel scectrophotometer according to claim 6, in which the illumination means contains a grating monochromator (103) with a diffraction grating (105) and the sample signal comprises a plurality of orders of diffraction of the diffraction grating (105), there being provided at each detector element (402) of the detector element (40) a device for the optional introduction of an order filter for the selective detection of the sample or reference signals corresponding to a predetermined order of diffraction of the orders of diffraction of the sample signal.

9. Multichannel spectrophotometer according to claim 5, in which the illumination means is a polychromatic light source (10) and in which the distribution means (210, 310) and the detector means (40) are designed for spectrally selective signal detection.

## Revendications

1. Dispositif d'examen qui comprend :
- un moyen d'éclairage (10) pour produire un signal d'échantillon,
- un grand nombre de moyens conducteurs de signaux d'échantillon (202) pour guider le signal d'échantillon vers des moyens de sonde d'examen (204),
- des premiers moyens de distribution (210) pour l'introduction simultanée du signal d'échantillon dans les moyens conducteurs de signaux d'échantillon (202), et
- un moyen de détection (40) avec un grand nombre d'éléments de détection (401) qui sont prévus chacun pour détecter des signaux de sonde des moyens de sonde d'examen (204),
**caractérisé par**
- un grand nombre de moyens conducteurs de signaux de sonde (205) pour guider des signaux de sonde, chacun, d'un moyen de sonde d'examen (204) vers l'un des éléments de détection (401), et
- un grand nombre de moyens conducteurs de signaux de référence (311) pour guider un signal de référence du moyen d'éclairage (10) vers chaque élément de détection (401), et
- un deuxième moyen de distribution (310) pour introduire simultanément le signal de référence dans chacun des moyens conducteurs de signaux de référence (311).

2. Dispositif selon la revendication 1, dans lequel les moyens conducteurs de signaux de référence (311) sont disposés de manière qu'un signal de référence pouvant être synchronisé peut être détecté par chacun des éléments de détection (401).

3. Dispositif selon la revendication 1 ou 2, dans lequel les moyens conducteurs de signaux d'échantillon, de signaux de sonde et de signaux de référence (202, 205, 311) sont formés chacun par des fibres optiques.

4. Dispositif selon la revendication 3 dans lequel les premiers et/ou deuxièmes moyens de distribution (210, 310) sont formés par des coupleurs à guide optique (211), des coupleurs à plaque (212), des coupleurs à faisceau (213) ou des coupleurs à miroir (214).

5. Photomètre spectral à plusieurs canaux qui contient un dispositif selon l'une des revendications 1 à 4.

6. Photomètre spectral à plusieurs canaux selon la revendication 5, dans lequel le moyen d'éclairage est une source lumineuse (10) de spectre variable dont la lumière peut être introduite simultanément, en tant que signal d'échantillon, dans un grand nombre de guides optiques qui forment des canaux de mesure séparés, le premier moyen de distribution (210) comprenant un coupleur à faisceau (213) sur lequel les guides optiques sont disposés à la manière d'un faisceau, à leurs extrémités côté entrée, au moyen d'une monture, de manière que soit formée une surface frontale de faisceau sur laquelle le signal d'échantillon peut être projeté.

7. Photomètre spectral à plusieurs canaux selon la revendication 6, dans lequel chaque guide optique est formé, dans la zone du moyen de distribution, par un grand nombre de fibres optiques, les extrémités des fibres étant disposées uniformément réparties sur la surface frontale de faisceau.

8. Photomètre spectral à plusieurs canaux selon la revendication 6, dans lequel le moyen d'éclairage contient un monochromateur à grille (103) avec une grille de diffraction (105), et le signal d'échantillon comprend plusieurs ordres de diffraction de la grille à diffraction (105), un dispositif (403) étant prévu sur chaque élément de détection (402) du moyen de détection (40) pour l'introduction au choix d'un filtre d'ordre pour la détection sélective des signaux d'échantillon ou de référence conformément à un ordre de diffraction prédéterminé des ordres de diffraction du signal d'échantillon.

9. Photomètre spectral à plusieurs canaux selon la revendication 5, dans lequel le moyen d'éclairage est une source lumineuse (10) polychrome et dans lequel les moyens de distribution (210, 310) et le moyen de détection (40) sont conçus pour la détection spectrale sélective des signaux.
